# EUROPEAN PATENT SPECIFICATION

(11) **EP 3 225 091 B1**
(45) Date of publication and mention of the grant of the patent: **25.12.2019**
(21) Application number: 17163696.2
(22) Date of filing: 29.03.2017
(51) Int. Cl.: A01C 3/02, A01C 23/04

(54) **A SLURRY PUMP WITH A FLAP VALVE**
EINE GÜLLEPUMPE MIT EINEM KLAPPENVENTIL
UNE POMPE À BOUE AVEC UN CLAPET

(30) Priority: 30.03.2016 DK 201600190
(43) Date of publication of application: 04.10.2017
(73) Proprietor: Sørensen, Harry Højvang, 6818 Årre (DK)
(72) Inventor: Sørensen, Harry Højvang, 6818 Årre (DK)
(74) Representative: Skov, Anders

(56) References cited:
- EP-A1- 2 870 851
- EP-A1- 2 929 771
- DE-A1- 1 528 969
- DE-A1- 4 225 574
- DE-C- 494 649
- FR-A- 579 775
- FR-A1- 2 453 669
- FR-A2- 2 514 984

## Description

The present invention relates to a slurry pump with a flap valve, more particularly to a slurry pump for use at the end of a crane arm on a slurry wagon or trailer.

### Background of the Invention

Self-loading slurry wagons and trailers are widely known. Usually, they have a crane arm lying along the length of the vehicle. This crane arm comprises one or more slurry hoses connecting a pump at the end of the crane arm to the slurry tank of the vehicle so that the slurry tank can be filled with or emptied of slurry, for example from or to a storage tank, typically through a hopper.

In order to avoid mess and spreading of infections, it is important to ensure that slurry does not flow out of the pump when the crane arm is swung out or packed together. Therefore, known slurry pumps are equipped with a spade valve for opening and closing of the pump intake and discharge pipes.

Such a solution, however, involves at least two problems, both due to the fact that both the "spade" and the cylinders actuating it protrude laterally from the pump when the pump is open.

Firstly, it happens regularly that the cylinders and/or the spade hit an obstacle and are damaged or destroyed when the pump is to be lowered into a groove such as, for instance, a hopper, from which slurry is to be sucked up.

Secondly, the fact that the cylinders and the spade protrude laterally from the pump means that the pump must be provided with a piece of pipe or hose outside the spade valve cylinder if it is to fit tightly into a hopper or other coupling devices, through which the slurry is to be sucked into the tank of the slurry wagon or trailer. This results in a higher suction height with respect to the slurry to be sucked up, which in turn can result in difficulties when it comes to priming the slurry pump and to maintaining the necessary suction/vacuum - especially if the slurry has a high content of dry matter and/or the connection between the slurry pump and hopper is not completely tight. Thus, "false air" in the pump intake extends the loading time significantly.

FR 2 514 984 A2 discloses a grinder mounted on an arm for grinding slurry in a pit prior to loading it onto a wagon. A flap in the side of the discharge pipe of the grinding mill is kept open and ensures that the slurry is returned from the grinder back into the container until the slurry is homogenised sufficiently. At that point, the flap is closed, and the slurry is pumped through the discharge pipe to the wagon.

FR 579 775 A discloses a liquid manure pump for agitating, during the operation of the pump, the bodies which are deposited on the bottom of the manure pit, so that these bodies reach the action zone of the pump simultaneously with the liquid component of the liquid manure.

DE 1 528 969 A1 discloses a slurry pump, the inlet opening of which can be partly sealed by a flap.

DE 4 225 574 A1 discloses a device for sucking fluids from a tank.

A further slurry pump is disclosed by EP 2 929 771 A1.

### Brief description of the invention

It is an object of the present invention to provide a slurry pump without the above-mentioned disadvantages characterising known slurry pumps within the market.

The present invention is defined by claim 1.

With such a configuration of the slurry pump, a closing mechanism is obtained, which does not protrude from the pump in neither the open nor the closed condition thereof, whereby the above problems of prior art slurry pumps on the market are avoided. The flap valve also provides a tighter sealing than the normally used spade valves.

It should be emphasized that, in this context, the term "flap valve" should not be understood as a simple pressure-controlled one-way valve, but as a valve, which can be opened or closed mechanically by the control system of the pump so that the slurry pump can be used for pumping in both directions.

In an embodiment of the invention, the slurry pump is provided with an opening mechanism for active and controlled opening of the flap valve and with a spring load or the like, which is arranged to keep the flap valve closed when it is not being actively opened by means of the opening mechanism or kept open by an inward flow of slurry.

By using such a spring-loaded flap valve, among other things, a simpler and more efficient priming of the slurry pump is obtained as described below.

In an embodiment of the invention, the opening mechanism comprises a hydraulic, pneumatic or electric actuator.

In an embodiment of the invention, the spring mechanism comprises a coil spring or a gas spring.

In an embodiment of the invention, the slurry pump further comprises the impeller which, by means of an actuator, can be displaced axially towards and away from the inlet/outlet of the slurry pump.

By using a displaceable impeller, it is achieved that the pump can be opened for through-flow without blockage of the inlet/outlet if another pump in the system supplies the pumping force, and an optimum pump efficiency can be achieved with the impeller close to the input/outlet when the slurry pump is function.

In an aspect of the invention, it relates to a slurry wagon or trailer comprising a slurry pump as described above.

### The drawings

In the following, an exemplary embodiment of the invention is described in more detail with reference to the drawings, of which
- Fig. 1: shows a cross-section of a slurry pump according to an embodiment of the invention, where the slurry pump is ready for beginning a priming of the pump prior to a suction of slurry,
- Fig. 2: shows a cross-section of the same slurry pump during priming of the pump,
- Fig. 3: shows a cross-section of the same slurry pump after completed priming, and
- Fig. 4: shows a cross-section of the same slurry pump during suction of slurry.

### Detailed description of the invention

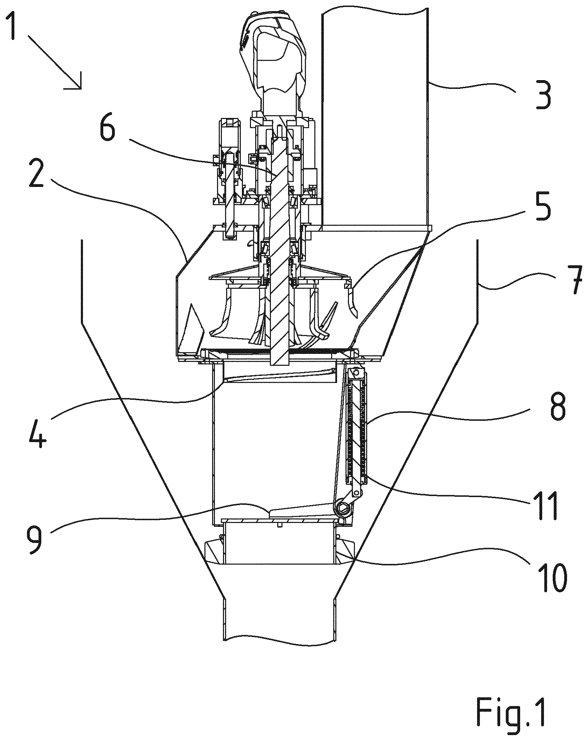

Fig. 1 shows a cross-section of a slurry pump 1 according to an embodiment of the invention, where the slurry pump 1 is ready for beginning a priming of the slurry pump 1 prior to a suction of slurry.

The illustrated slurry pump 1 is a centrifugal pump with an impeller 5 arranged in a pump housing 2, which is connected to the tank (not shown) of the slurry wagon/trailer (not shown) through a pump piping 3. On the opposite side of the pump housing 2 is an inlet/outlet 4, through which the slurry can be pumped into or out of the pump housing 2.

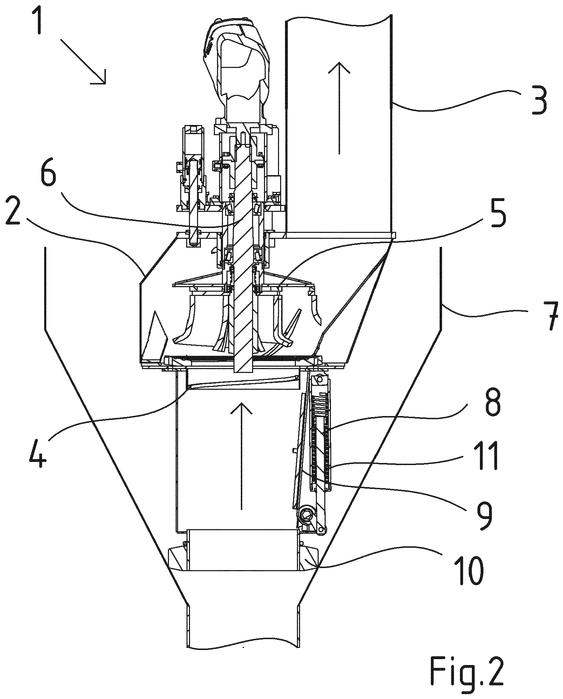

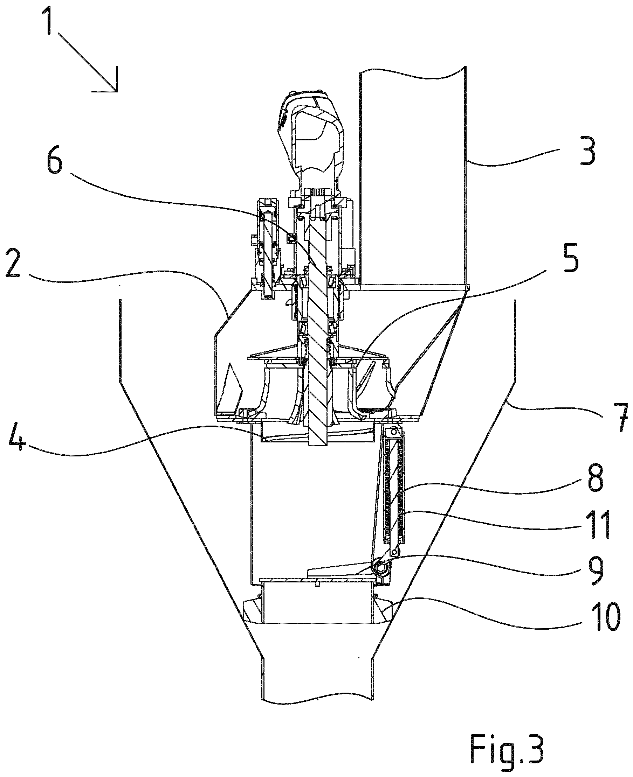

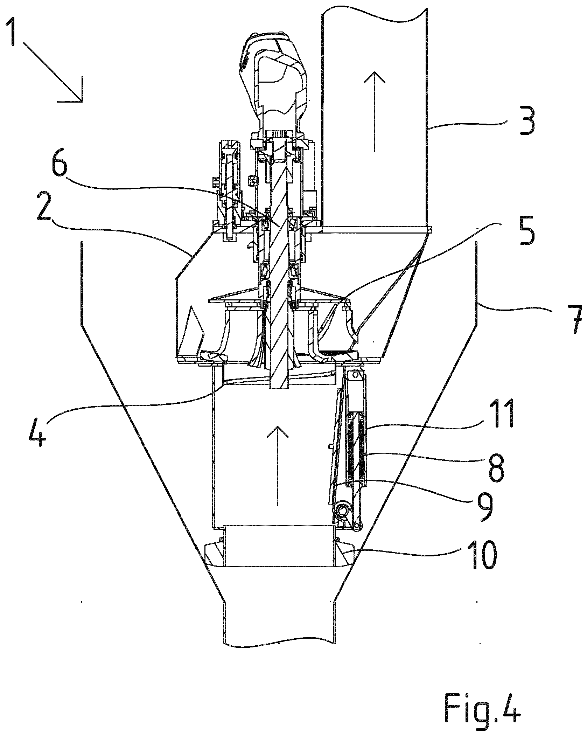

In the illustrated embodiment, the impeller 5 is mounted so that it can be displaced in the axial direction towards and away from the inlet/outlet 4. In Figs. 1 and 2, the impeller 5 is displaced away from the inlet/outlet 4 whereas, in Figs. 3 and 4, it is displaced toward the inlet/outlet 4.

The slurry pump 1 is provided with a flap valve 9, which can open inwards toward the inlet/outlet 4. The flap valve 9 can be opened and closed actively and controlled by means of an actuator 8 and is kept closed by means of a spring load 11 if it is not being actively opened or kept open by an inward flow of slurry.

The actuator 8 can retain the flap valve 9 in the open position, e.g., during loading or unloading of slurry with the use of all the pumps of the system, or it can retain the flap valve 9 in the closed position, e.g., in order to withstand the vacuum which may be built up in the system at the start of the vacuum pump for connection to a suction pipe or generally to prevent losses while the slurry pump 1 is not in use. In a third spring-biased use of the actuator 8, the flap valve 9 opens when a vacuum occurs in the pump housing 2, so that a floating function of the flap valve 9 is obtained during the initial suction phase, and the flap valve 9 closes during the final phase to prevent backflow of pumped slurry when the pumps are stopped.

The spring load 11 can, for instance, be designed as a hydraulic accumulator, which can be controlled by means of pressure-limiting valves with free return, which are inserted in the hydraulic string of the system.

The flap valve 9 can be made much tighter than the known spade valves, and the position of the actuator 8 and its connection to the flap valve 9 means that the space is used very efficiently.

The figure also shows how the slurry pump 1 is provided with a rubber ring 10 around its lower edge, which ensures a tight connection between the slurry pump 1 and a hopper 7, through which the slurry is sucked into or pumped out of the tank of the slurry wagon/trailer. In contrast to prior art systems employing a rubber hose, the use of such a rubber ring 10, which may further be replaceable, means that the slurry pump 1 tolerates a higher pressure against the connection point/hopper 7.

It is clearly seen how the slurry pump 1 can go in all the way into the funnel 7, because the flap valve 9 and its actuator 8 do not project outside the slurry pump 1 as is the case with prior art spade valves, which are normally used for such slurry pumps 1, but have outer dimensions corresponding to the dimensions of the funnel 7 near the bottom thereof. Thus, the slurry pump 1 can be brought very close to the surface of the slurry and the maximum suction efficiency is obtained due to the low suction height combined with a very tight connection between the slurry pump 1 and the funnel 7 caused by the rubber ring 10.

In the illustrated configuration of slurry pump 1 with the impeller 5 away from the inlet/outlet 4 and a closed flap valve 9, the slurry pump 1 is idle and ready for use. Because a centrifugal pump 1 as the one illustrated is not self-priming, it is necessary to prime it. If this cannot be done by lowering the inlet/outlet 4 into the slurry, the slurry can be sucked up by means of a vacuum pump (not shown) as described below.

Fig. 2 shows a cross section of the same slurry pump 1 during priming be means of a vacuum pump (not shown). In this case, the spade valves of the system (not shown) between the pump piping 3 and the tank of the slurry wagon/trailer are closed, and the vacuum pump draws the vacuum in the pump piping 3 and the pump housing 2, whereby the spring-loaded flap valve 9 is opened and slurry is sucked into the pump housing 2 and further into the pump piping 3 as indicated by the arrows in the figure.

In this phase, the impeller 5 stands still and it is still in the position away from the inlet/outlet 4 so that it does not block the inflowing slurry.

In Fig. 3, the priming of the slurry pump 1 has been completed, the pump housing 2 is filled with slurry, and the vacuum pump is stopped so that the pressure of the slurry in the pump housing 2 and the spring load 11 keeps the flap valve 9 closed and sealed. The spade valves between the pump piping 3 and the tank of the slurry wagon/trailer can now be opened without slurry being spilled out of slurry pump 1. The impeller 5 is moved toward the inlet/outlet 4 and the slurry pump 1 is ready to be started.

The active pump-in phase is illustrated in Fig. 4, where the spade valves to the tank of the slurry wagon/trailer are opened, the impeller 5 rotates and the slurry pump 1 pumps slurry through the pump housing 2 and further through the pump piping 3 into the tank of the slurry wagon/trailer as indicated by the arrows in the figure. The flap valve 9 can be kept actively open by the actuator 8, but it is actually not necessary because the flow of slurry flow will keep the flap valve 9 open anyway as long as the slurry pump 1 is running.

The fact that the space between the impeller 5 and the flap valve 9 is filled with slurry when the slurry pump 1 is started up means that any air, which is under the flap valve 9, will be mixed up with this slurry. Thus, a self-priming effect is obtained and the slurry pump 1 is fully operational virtually immediately after the start-up.

In the context of pumping slurry out, the flap valve 9 must be kept actively open by means of the actuator 8 because the flow of slurry would otherwise close the flap valve 9.

### List of reference numbers

- 1.: Slurry pump
- 2.: Pump housing
- 3.: Pump piping
- 4.: Inlet/outlet
- 5.: Impeller
- 6.: Actuator for impeller
- 7.: Hopper
- 8.: Actuator for flap valve
- 9.: Flap valve
- 10.: Rubber ring
- 11.: Spring load

## Claims

1. A slurry pump (1) for being mounted onto a crane arm on a slurry wagon or trailer for pumping slurry into and/or out of a tank of the slurry wagon/trailer,
wherein the slurry pump is a centrifugal pump with an impeller (5) arranged in a pump housing (2), which is arranged to be connected to the tank of the slurry wagon/trailer through a pump piping (3), and
wherein, on the opposite side of the pump housing, there is an inlet/outlet (4) through which the slurry can be pumped into or out of the pump housing,
**characterised in that**
said slurry pump is provided with a flap valve (9) so that the inlet/outlet of the slurry pump can be sealed off when the pump is not in use, and
that the flap valve is located outside the inlet/outlet and opens inwardly toward the input/outlet.

2. The slurry pump according to claim 1, wherein the slurry pump is provided with an opening mechanism (8) for active and controlled opening of the flap valve and with a spring load (11) or the like, which is arranged to keep the flap valve closed when it is not being actively opened by means of the opening mechanism or kept open by an inward flow of slurry.

3. The slurry pump according to claim 2, wherein the opening mechanism comprises a hydraulic, pneumatic or electric actuator.

4. The slurry pump according to claim 2 or 3, wherein the spring mechanism comprises a coil spring or a gas spring.

5. The slurry pump according to any of the preceding claims, wherein the slurry pump further comprises the impeller (5) which, by means of an actuator (6), can be displaced axially towards and away from the inlet/outlet of the slurry pump.

6. A slurry wagon or trailer comprising a slurry pump (1) according to any of the preceding claims.

## Patentansprüche

1. Güllepumpe (1) zur Befestigung an einem Kranarm an einem Güllewagen oder -anhänger zum Pumpen von Gülle in einen und/oder aus einem Tank des Güllewagens/-anhängers,
wobei die Güllepumpe eine Kreiselpumpe mit einem in einem Pumpengehäuse (2) angeordneten Laufrad (5) ist, das so angeordnet ist, dass es über eine Pumpenleitung (3) mit dem Tank des Güllewagens/-anhängers verbunden ist, und
wobei auf der gegenüberliegenden Seite des Pumpengehäuses ein Einlass/Auslass (4) vorhanden ist, durch den die Gülle in das oder aus dem Pumpengehäuse gepumpt werden kann,
**dadurch gekennzeichnet, dass**
die Güllepumpe mit einem Klappenventil (9) versehen ist, so dass der Einlass/Auslass der Güllepumpe abgedichtet werden kann, wenn die Pumpe nicht in Gebrauch ist, und
dass sich das Klappenventil außerhalb des Einlasses/Auslasses befindet und sich nach innen zum Einlass/Auslass öffnet.

2. Güllepumpe nach Anspruch 1, wobei die Güllepumpe mit einem Öffnungsmechanismus (8) zum aktiven und gesteuerten Öffnen des Klappenventils und mit einer Federlast (11) oder dergleichen versehen ist, die so angeordnet ist, dass sie das Klappenventil geschlossen hält, wenn es nicht aktiv über den Öffnungsmechanismus geöffnet wird oder durch einen Einwärtsstrom von Gülle offen gehalten wird.

3. Güllepumpe nach Anspruch 3, wobei der Öffnungsmechanismus ein hydraulisches, pneumatisches oder elektrisches Stellglied umfasst.

4. Güllepumpe nach Anspruch 2 oder 3, wobei der Federmechanismus eine Schraubenfeder oder eine Gasfeder umfasst.

5. Güllepumpe nach einem der vorstehenden Ansprüche, wobei die Güllepumpe weiter das Laufrad (5) umfasst, das mittels eines Stellglieds (6) axial in Richtung des Einlasses/Auslasses der Güllepumpe und von diesem weg verschiebbar ist.

6. Güllewagen oder -anhänger, umfassend eine Güllepumpe (1) nach einem der vorstehenden Ansprüche.

## Revendications

1. Pompe à boues (1) destinée à être montée sur un bras de grue sur un chariot ou une remorque à boues pour le pompage des boues dans et/ou hors d'une cuve du chariot/de la remorque à boues,
dans laquelle la pompe à boues est une pompe centrifuge dotée d'une turbine (5) agencée dans un logement de pompe (2) qui est agencé de façon à être raccordé à la cuve du chariot/de la remorque à boues par l'intermédiaire d'une conduite de pompe (3), et
dans laquelle, sur le côté opposé du logement de pompe se trouve une entrée/sortie (4) à travers laquelle les boues peuvent être pompées dans et hors du logement de pompe,
**caractérisée en ce que**
ladite pompe à boues est dotée d'un clapet (9) de sorte que l'entrée/la sortie de la pompe à boues puisse être hermétiquement fermée lorsque la pompe n'est pas utilisée, et
**en ce que** le clapet est situé à l'extérieur de l'entrée/la sortie et s'ouvre vers l'intérieur vers l'entrée/la sortie.

2. Pompe à boues selon la revendication 1, dans laquelle la pompe à boues est dotée d'un mécanisme d'ouverture (8) pour une ouverture active et contrôlée du clapet et dotée d'un ressort (11) ou similaire, qui est agencé de façon à garder le clapet fermé lorsqu'il n'est pas en train d'être ouvert activement au moyen du mécanisme d'ouverture ou qui reste ouvert par un écoulement des boues vers l'intérieur.

3. Pompe à boues selon la revendication 3, dans laquelle le mécanisme d'ouverture comprend un actionneur hydraulique, pneumatique ou électrique.

4. Pompe à boues selon la revendication 2 ou 3, dans laquelle le mécanisme à ressort comprend un ressort hélicoïdal ou un ressort à gaz.

5. Pompe à boues selon l'une quelconque des revendications précédentes, dans laquelle la pompe à boues comprend en outre la turbine (5) qui, au moyen d'un actionneur (6), peut être dirigée vers et éloignée axialement de l'entrée/la sortie de la pompe à boues.

6. Chariot ou remorque à boues comprenant une pompe à boues (1) selon l'une quelconque des revendications précédentes.
